# EUROPEAN PATENT SPECIFICATION

(11) **EP 1 473 638 B1**
(45) Date of publication and mention of the grant of the patent: **23.07.2008**
(21) Application number: 03291032.5
(22) Date of filing: 28.04.2003
(51) Int. Cl.: G06F 13/42, G06F 13/40

(54) **Terminal management bus**
Bussystem für die Verwaltung eines Endgeräts
Bus pour la gestion d'un terminal

(43) Date of publication of application: 03.11.2004
(73) Proprietor: Texas Instruments Incorporated, Dallas, Texas 75251 (US); TEXAS INSTRUMENTS FRANCE, 06271 Villeneuve Loubet Cedex, Nice (FR)
(72) Inventor: Leduc, Yves, 06330 Roquefort Les Pins (FR); Messina, Nathalie, 06100 Nice (FR); Clave, Gael Christian, 06600 Antibes (FR)
(74) Representative: Holt, Michael

(56) References cited:
- EP-A- 0 631 239
- US-A- 5 926 651
- IEEE: "IEEE Standard for High Performance Serial Bus" IEEE STANDARD FOR AN HIGH PERFORMANCE SERIAL BUS. IEEE STD 1394 - 1995, NEW YORK, NY: IEEE, US, 1995, pages 19-47, XP002144837 ISBN: 1-55937-583-3

## Description

### TECHNICAL FIELD

This invention relates in general to electronics and, more particularly, to a bus for mobile electronic devices.

### BACKGROUND OF THE INVENTION

In many current circuit designs, each specific data transfer uses its own dedicated bus, wires and pins. In modern systems having multiple applications, the number of buses is increasing rapidly causing severe PCB (printed circuit board) congestion and high system cost. For instance, in current typical mobile telecommunication devices, four buses are used: a voice bus, a microcontroller bus, a DSP bus and a real-time management bus. The complexity of the bus structure creates several problems. It increases the complexity of both the hardware and software (including both embedded software and development tools). Moreover, the bus structure does not adapt well to new generations of mobile phones.

Several attempts have been made to simplify bus structure. The Philips I²C bus is a serial bus relying on the use of two wires: a data wire and a clock wire. It has a multi-master architecture, which means that there can be many masters at the same time (implying an arbitration procedure). The bus has three modes: standard, fast and high speed, the bit rate of these modes is 100 kbits/s, 400 kbits/s and 3.4 Mbits/s.

However, this bus has few disadvantages. When the slave sends the data asked by the master, it uses the clock given by the master using the clock line and the master uses its own clock to sample the data. This means that the data arrives to the master with a double-delay: the delay needed for the clock to reach the slave, and the delay needed for the data to reach the master. If these delays are excessive, the master could sample an invalid data.

Moreover, the swing of the wires corresponds to the supply swing of the supply domains that are crossed by the bus. Not only does this large swing increase the power consumption and reduce the maximum bit rate, but it also forces the bus to use discrete level shifters between the different supply domains. However, if the frontier between supply domains corresponds to the frontier between mode domains (standard or fast mode and high speed mode), these level shifters are inside the chip that makes the bridge, adding two pins. In both cases, level shifting takes place.

Therefore a need exists for a high speed, low voltage, simplified bus structure.

European patent application no. 0631239 describes a data transfer method using a three-line serial bus for transferring data frames between microcomputers. US patent no. 5,926,651 describes an output buffer circuit with current paths having different current carrying characteristics for providing programmable slew rate and signal strength.

### SUMMARY OF THE INVENTION

In the present invention, a circuit comprises a master circuit and a plurality of slave circuits. A bus provides communication between the master circuit and said slave circuits. The bus includes first and second wires for communicating using DS (Data Strobe) encoding and a third wire for allocating access of said first and second wires between the master circuit and the slave circuits. The master and said slave circuits include driver circuitry to selectively generate either strong or weak logic level signals on the third wire for controlling access to the first and second wires, the strong logic signal being used only at the end of the transmission by either the master circuit or slave circuits to transition from a high to a low state or a low to high state.

In other aspects of the invention, an optional fourth wire can transport a system clock and an optional fifth wire can provide a general purpose electrical link.

The invention also resides in a method of communicating data words between a master circuit and a plurality of slave circuits over first and second bus wires using data strobe encoding, comprising the steps of: allocating access to said first and second wires between the master circuit and the slave circuits using control signals on a third wire, wherein the master circuit and the slave circuits selectively generate either strong or weak logic level signals on the third wire for controlling access to the first and second wires, the strong logic signal being used only at the end of the transmission by either the master circuit or slave circuits to transition from a high to a low state or a low to high state.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 illustrates a block diagram of a circuit using a minimal embodiment of the bus structure of the present invention;
Figures 2a illustrates a timing diagram of a transaction using the bus of Figure 1;
Figure 2b illustrates a state diagram describing operation of the bus of Figure 1;
Figure 3 illustrates a block diagram of a multiple level bus configuration;
Figure 4 illustrates a block diagram of an multiple-level example circuit;
Figure 5a illustrates a chronograph illustrating addressing and pass-through of data on the circuit of Figure 4;
Figure 5b illustrates a chronograph illustrating configuration data sent along with address data;
Figure 6 illustrates a timing diagram showing adaptive bit rates for high bus efficiency;
Figure 7 illustrates a block diagram of the bus used for scan path testing;
Figure 8 illustrates scalability of the bus of Figure 1 to increase bandwidth;
Figure 9 illustrates a block diagram of an embodiment of the bus with additional wires;
Figure 10 illustrates a block diagram of a example of use of the bus in conjunction with a deep power down;
Figures 11 through 13 illustrate block diagrams of an examples of the bus used for testing;
Figure 14 illustrates an example of a cooperative calibration;
Figure 15 illustrates a device using slave circuits with adaptive ports to automatically drive the bus with voltage swings compatible with a master circuit;
Figure 16 illustrates a block diagram prior art bus driver that could be used by the master circuit to drive the bus;
Figure 17 illustrates an adaptive voltage bus driver for driving the bus responsive to a reference voltage signal from the master bus driver; and
Figure 18 illustrates a bus driver with programmable capacitance for driving a bus coupled to external devices, such as testers, with high capacitances.

### DETAILED DESCRIPTION OF THE INVENTION

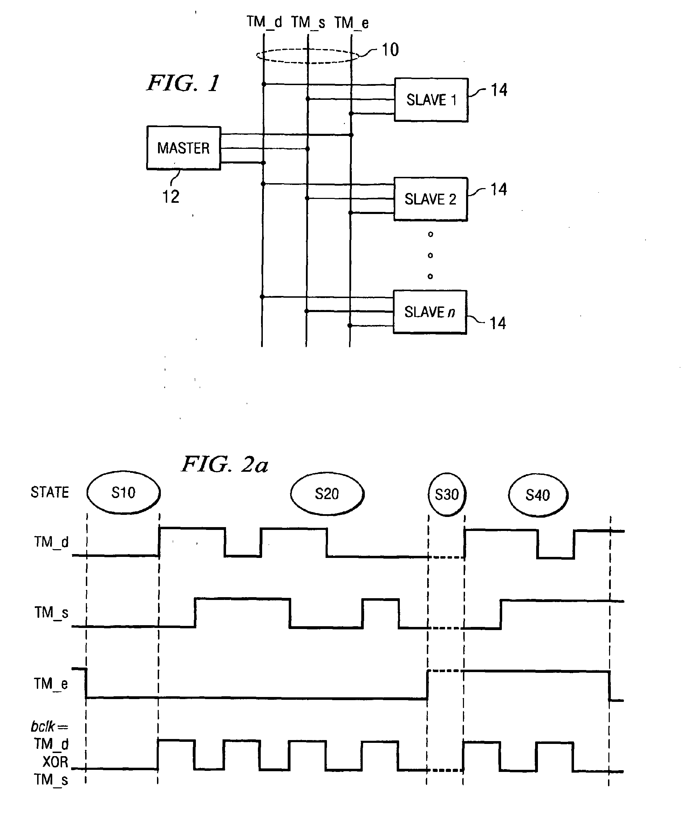

The present invention is best understood in relation to Figures 1 - 18 of the drawings, like numerals being used for like elements of the various drawings.

Figure 1 illustrates a block diagram of a circuit using a "terminal management" (TM) bus 10. A master circuit 12 is coupled to TM bus 10, along with n slave circuits 14. The terminal management bus 10 includes at least three bidirectional wires: TM_d, TM_s and TM_e.

Figure 2a illustrates a timing diagram describing the operation of a "terminal management" bus 10. Wires TM_d and TM_s transmit data and clock information using the well known DS encoding. The data is sent on the TM_d wire by the "sender" of the data (either the master circuit 12 or a slave 14) using the local clock of the sender. At each clock, if there is a logical voltage transition on TM_d (i.e., there is a data change from a logical "0" to a logical "1" or from a logical "1" to a logical "0"), then there is no logical voltage transition on TM_s. On the other hand, if there is a no logical voltage transition on TM_d (i.e., the data stays at a "0" or a "1"), then the sender forces a logical voltage transition on TM_s.

At the receiving end, as can be seen in Figure 2a, a data clock (bclk) can be locally generated by the receiver (either the master circuit 12 or a slave 14) from the information on the TM_d and TM_s lines by performing a logical XOR (exclusive-or) operation. bclk can then be used to sample the data on TM_d (the data on TM_d is double-edge clocked; data is sampled on both edges of bclk). The reconstruction on the fly of the clock at the receiver solves the problem of clock extraction, making the data slicing very tolerant to clock skews. This is a major advantage of DS encoding.

The TM_s signal is generated in such a way that the reconstructed bit clock has no missing transitions and no spikes. The polarity of the signal on TM_s is dependant on its initial state before the beginning of a word transmission, but has no other meaning. The DS encoding transmits two bits per clock period. In the preferred embodiment, an even number of bits for a word transmission is chosen as it simplifies the physical realization of the bus.

The TM_d and the TM_s signals alone cannot unequivocally determine the direction (master to slave or slave to master) of a transmission, and the beginning and the end of a word transmission especially when variable word length is allowed. For these purposes, a third signal, on the TM_e wire frames the word transmission by allocating control of the bus 10 to either the master 12 or one of the slaves 14. In the illustrated embodiment of Figure 2a, a logical low signal on TM_e is chosen to indicate control of the bus 10 by the master 12 and a logical high signal on TM_e to indicate control of the bus 10 by one of the slaves 14. According to this choice, low-to-high transitions on TM_e are generated by the master 12 and high-to-low transitions on TM_e are typically generated by the active slave, although the master 12 can force a high-to-low transition in certain cases.

In the preferred embodiment, the bus drivers associated with the master 12 and the slaves 14 use three states: strong, weak, and HiZ (high impedance). The following rules apply to the drivers of TM_d and TM_s wires:
1) At least one active weak driver or one active strong driver is connected to the wire;
2) An active strong driver must never be connected against more than one active weak driver; and
3) A wire is never connected to more than one active strong driver.

For the TM_e wire, slightly different rules apply. TM_e is latched by the master 12 using a weak latch. Strong drivers are used on TM_e (by either the master 12 or slave 14) only when a transition is necessary.

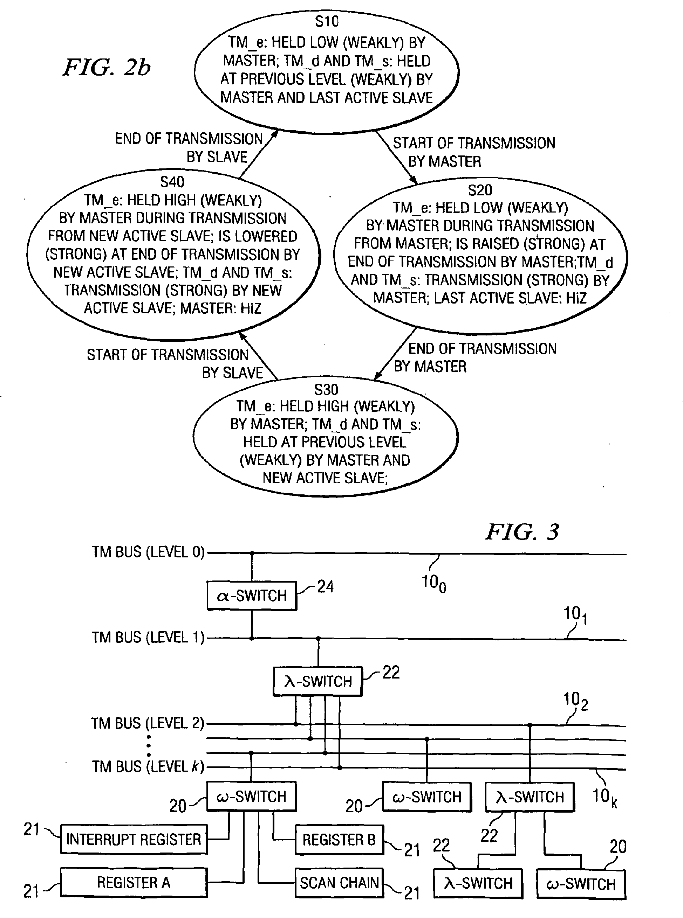

With reference to Figure 2a and 2b, transactions between a master 12 and two slaves 14 are illustrated. In a typical transaction, the master 12 "talks" to a slave 14 and a slave 14 "answers". State S10 indicates a wait state prior to communication from the master 12. In this state, TM_e is latched in a logical low state by the master 12 using a weak driver. TM_d and TM_s remain in their previous states by the last active slave with a weak driver (keeper), while the master 12 helps maintain the state using a weak driver (follower) as well. All other slaves are in a HiZ state. If there is no last active slave, such as after a reset, the wires are connected to the master 12 using a weak driver and all slaves are in a HiZ state.

In state S20, the master 12 begins a data communication targeting a particular slave 14 using a strong driver on TM_s and TM_d. The strong driver overcomes any weak drivers from the last active slave. On the first transition on either TM_s or TM_d (i.e., the first bit), the last active slave places its TM_s and TM_d drivers in HiZ. At the end of the transmission, the master 12 uses its strong driver to raise TM_e to a logical high state, returning control to the targeted slave 14. TM_e remains weakly latched by the master 12.

In state S30, the master 12 waits for a transmission from the targeted slave 14. The targeted slave becomes the new active slave. TM_s and TM_d are kept in their previous state by weak driver of the master 12 (keeper) and of the active slave (follower). TM_e is weakly latched in a logical high state by the master 12 to allow the new active slave to communicate over TM_s and TM_d.

In state S40, slave transmission begins. When the new active slave answers, it uses strong drivers on TM_s and TM_d. Upon sensing the strong drivers on TM_s or TM_d, the master 12 immediately makes its drivers HiZ. During the answer, TM_e is weakly latched by the master 12. At the end of the transmission, the slave 14 uses its strong driver to lower TM_e to a logical low state, returning control to the master 12. TM_e is weakly latched by the master 12.

The TM bus can be used to distribute data between integrated circuits and between imbedded devices within an integrated circuit. Figures 3 - 5 illustrate a preferred embodiment for passing data between master 12 and slaves 14 within an integrated circuit using a hierarchical organization with multiple levels of TM buses. Switches are used to pass data between buses of different levels and between a bus and a device register. In this preferred embodiment, three types of switches exist: an α-switch, which is a switch with an alias (which is the IC address), a λ-switch, which is a switch that bridges buses of different levels, and an ω-switch, which is a switch that addresses registers or scan paths. A physical realization of a switch could combine the functionalities of α-switch, λ-switch and/or ω-switch.

A preferred embodiment is shown in Figure 3, using these three different switch types. An ω-switch 20 passes data from a bus 10 to a register 21 (which could be, for example, part of a scan chain). A λ-switch 22 passes data between different bus levels. An α-switch 24 passes data from the highest level bus (level 0) to lower level buses. In this preferred embodiment, the alias of the α-switch 24 is a four bit address.

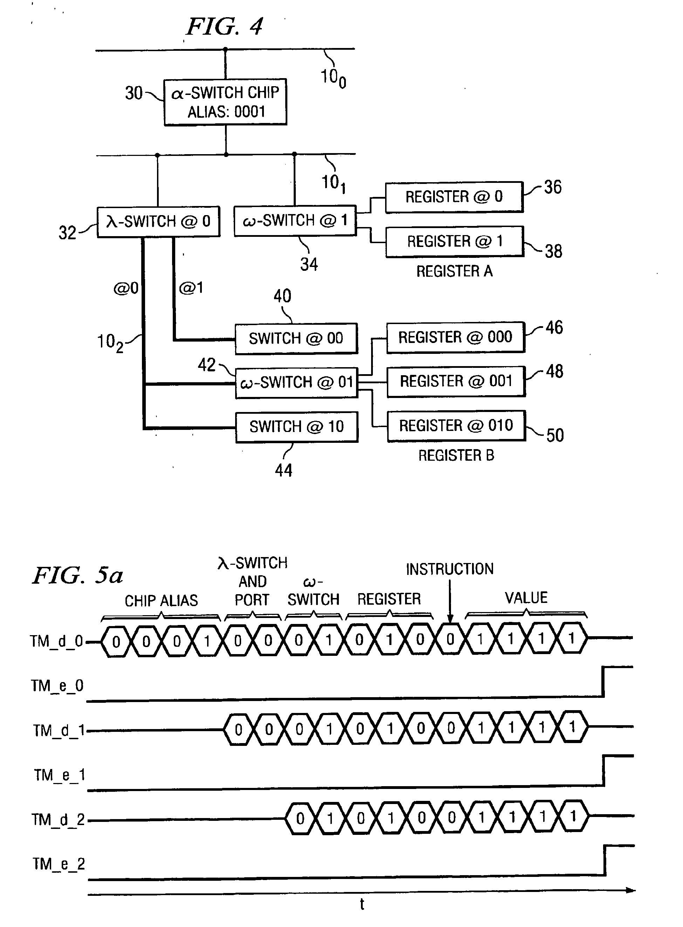

Figure 4 illustrates a block diagram of a multiple bus structure. In Figure 4, three bus levels are shown (buses 10₀ through 10₂). An α-switch 30 with chip alias "0001" couples bus 10₀ to bus 10₁. A λ-switch 32 has address "0" on bus 10₁ and an ω-switch 34 has address "1" on bus 10₁. Two registers 36 and 38 are coupled to ω-switch 34 at addresses "0" and "1", respectively. Three switches 40, 42, and 44 are coupled to λ-switch 32, at addresses "00", "01" and "10", respectively. Switch 42 is an ω-switch. Three registers 46, 48 and 50 are coupled to ω-switch 42, at addresses "000", "001" and "010", respectively.

For data to pass from a master 12 to register 38, for example, it must pass through α-switch 30 at alias "0001", through ω-switch 34 at address "1" on bus 10₁ to register address "1". Thus, the global address of register 38 is "0001 1 1".

The addressing mode described in connection with Figures 3 - 4 allows on-the-fly routing shown in the chronograph of Figure 5a. In this example, a transmission from master 12 to register 50 (global address "0001 00 01 010") is shown. The α-switches on bus 10₀ read the first four bits ("0001") of the data stream and the identified α-switch passes the remaining bits "00 01 010" to bus 10₁. Similarly, λ-switch 32 identifies itself as switch "0" on bus 10₁ and passes the remainder "01 010" to bus 10₂ (at port "0" of λ-switch 32). The ω-switch 42 (at address "01") receives the address of the selected register ("010"), the instruction ("0", indicating a write operation) and the value ("1111") and performs the requested operation.

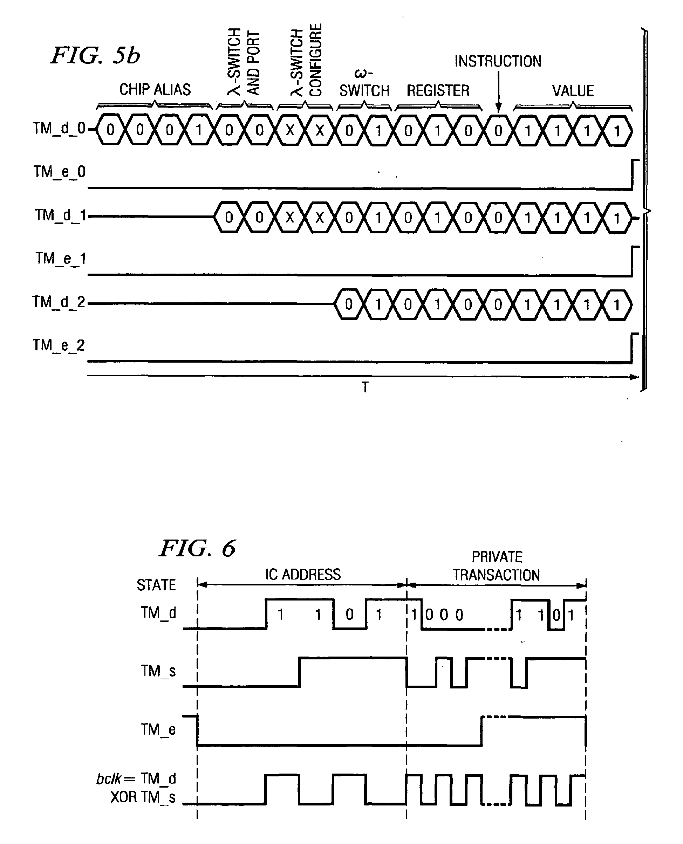

Figure 5b illustrates an example where configuration information may be passed in the data stream. In this example, two configuration bits are placed in the data stream after the address for the λ-switch and port (shown as "xx"). The λ-switch 32 recognizes the bits as configuration bits, configures itself accordingly and passes the remaining bits to the next bus. Each switch may independently decode the address field and pass the remaining bits after removing any configuration bits.

In the preferred embodiment, several transactions are supported. A typical transaction has the following steps: (1) the master 12 sends its command and sets TM_e to a high logical level to pass control of the bus to the slave, (2) the slave 14 sends its answer and sets TM_e back to a low logic level, giving the control of the bus back to the master 12. For exception handling, if a slave 14 does not answer (in the case of very simple or timed-out slave), the master 12 can take the control back by itself, by lowering TM_e. Except for a short command (described below), the word sent by the master 12 always begin with the 4-bit alias of the targeted IC or by 0000 for a broadcasted command.

Even if each chip has its own ID, the chip ID may be too long and would lower the performances of the bus. Accordingly, in the preferred embodiment, each chip is assigned a chip alias. This alias can be hard-coded (no need to run the alias setting command but only one alias possible) or soft-coded (need to run the alias setting command but multi-aliasing possible). The alias 0000 is reserved for the master 12 and is not assigned to any slave 14.

In some cases, it may be desirable to use slave circuits 14 with hard-coded addresses. This may cause a problem, if two slave circuits 14 have the same hard-coded address. In some cases, it may be possible to use both slave circuits, despite the identical address, by switching the connections to the TM_d and TM_s wires on one of the slaves. If both slave circuits had, for example, a hard-coded address of "1001", the slave circuit with the reversed TM_d and TM_s connections could be addressed as "0011". In this case, the master should drive the TM_d and the TM_s accordingly: what was normally sent on TM_d should now be sent on TM_s and what was normally sent on TM_s should now be sent on TM_d.

The write command is used to write a value in a register 21. The targeted IC sends back two status bits that tell if the write was successful or if it has been denied. The first bit is a don't care bit and the second bit indicates a successful write operation as a "1" and a denied write operation as a "0". The write command is made up with the alias of the targeted IC, the internal address of the register 21 followed by a 0 and the data to be written in the register 21. A write denial can happen when the master 12 tries to write in a register 21 that has not been read yet by the IC owner of this register since the last write. In that case, the previous value of the register is preserved.

The read command is used to retrieve data stored by a register 21 in slave 14. The process remains the same: the master 12 sends the alias of the targeted IC, the internal address of the register 21 but followed this time by a "1" and nothing else. The answer of the slave 14 is composed by two status bits, followed by the data. In a read operation, it is the last status bit that is a don't care, the first one indicates the success (1) or the denial (0) of the operation. In the preferred embodiment, there are two kinds of slave registers: one sends its content even if read is denied, the other just sends the status bits and does not send data if the read operation is denied.

As described above, in a read or write command, the register address is be followed whether by "1" (read) or "0" (write). In effect, this convention splits the address in two: a write address, and a read address. Thus, if desired, it is possible to make a write-only register and a read-only register sharing the same "address".

Special commands can be sent to the slaves 14 using a process similar to a write command. In this case, the address of the register is replaced by the command's ID, followed by a 0 and the parameter (if any) of the command. The slave 14 sends, as usual, two status bits, the second bit at "1" if the command is accepted and at "0" if the command is denied. If a slave 14 does not support handshaking, it can give the control back to the master 12 (by lowering TM_e) without replying with the status bits. In addition to the parameters, a set of bits could be transmitted with the only purpose to create a complimentary clock to be used by the slave to execute the command without the need of a local clock.

The alias setting command is a write command using the reserved alias "0000" (broadcast), the chip ID of the IC as the internal address and the alias to be set as the data. The chip answers with the two status bits. If the alias is accepted, the second bit is a "1"; if not, the second bit is a "0".

Some applications might need to have multiple masters. In this case, a slave 14 could be "upgraded" to the rank of master by the previous master, which then becomes a slave 14. This can be accomplished by the alias setting command, using the chip ID of the new master, and the master alias "0000" as the alias to be set. The chip answers with the two status bits. If the second bit is a "1", the chip becomes the new master; if the second bit is a "0", the control stays with the previous master.

The bus 10 is able to deal with "short commands" (2 bits long). In the preferred embodiment, the "00" is a broadcasted "ping" command used for test purposes.

The slaves 14 can send an interrupt to the master 12. To do so, the master 12 must open an "interrupt window". It does this by simply raising TM_e without sending any command. If a slave 14 has an interrupt to send, it simply has to lower TM_e, giving the control back to the master 12, which then reads the interrupt registers of all slaves 14 to determine which one launched the interrupt, and which one has the priority, if more than one slave 14 launched it.

The TM bus is designed to accommodate isochronous transactions; i.e., in transactions where the master's clock and the slaves' clocks may be different, the bus will still be able to transfer data without any lost. The main problem occurs when the master 12 tries to write to a register that has not been read yet by the slave 14 or when the master 12 tries to read a register that has not yet been written by the slave 14 (where this data has already been read by the master 12).

To solve these problems, the two-bit status sent back by the slave 14 after a read or a write is very useful. When the master 12 sends a write command to a slave 14, the slave 14 will "look" at the write status register assigned to the targeted register, if it holds a "1", it means that the slave chip has not yet read the register and the write is denied. If the write status register holds a "0", the slave 14 has read the register and is waiting for more data. Thus, the slave 14 must set the write status register to "0" after reading the register, or else the write will always be denied.

When the master 12 issues a read command, the mechanism is very similar, except that the read status register tells whether the slave 14 has written in the register since last read or not. However, the master 12 may want to read a register it has already read, therefore the slave 14 sends the content of the register, even if the read is denied.

Figure 6 illustrates an adaptive bit rate scheme that can be used by the master 12 when various slaves 14 have different speeds at which data can be received. As shown in Figure 6, the master 12 outputs the chip alias at the speed of the slowest slave 14. All slaves 14 can then determine whether the current transaction is destined for them. After outputting the slave alias (the first four bits of the transaction), however, the transaction may proceed at the highest bit rate compatible with the particular slave involved in the transaction. Accordingly, the bits following the slave alias (i.e., the "private transaction" bits) can be sent at the fastest possible speed (up to the fastest speed of the master 12), making the transaction as efficient as possible. Since the data clock is derived from TM_d and TM_e, bclk is automatically adjusted to the proper speed. The chosen slave 14 can answer at its speed without regard to the speed of the other slaves 14.

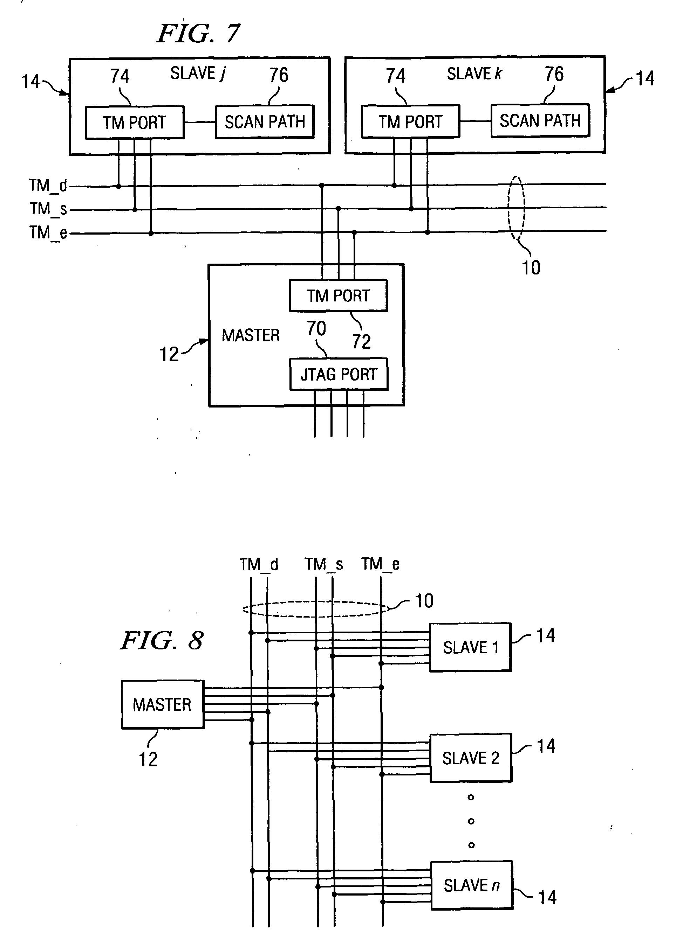

Figure 7 illustrates the bus used in conjunction with scan path testing. Test data is received through JTAG port 70 in master circuit 12. The data is passed through the bus driver port 72 of master 12 to bus 10. Test data is received by the slaves 14 through their bus driver ports 74 and passed to scan paths 76 (using ω-switches as described above).

Figure 8 illustrates a block diagram using the bus 10 with multiple TM_d and TM_e lines to provide additional bandwidth where necessary. The bus 10 could be scaled as appropriate to provide a desired bandwidth.

The present invention provides significant advantages over the prior art. First, it is skew-tolerant, so it does not suffer the problems of clock delay in other solutions. Second, it can work with multiple clocks in different circuits, supporting isochronous, synchronous and asynchronous transactions. Third, the data lines are scalable, so the bus can support additional bandwidth without changing its overall structure. Fourth, The TM_e line provides support for variable length words between the master and slave. Fifth, latency is kept low by adaptive bit rates in private transactions between the master and a selected slave, while compatibility is maintained for slave with varying speeds. Sixth, the simplicity of the bus allows for low power and low area requirements.

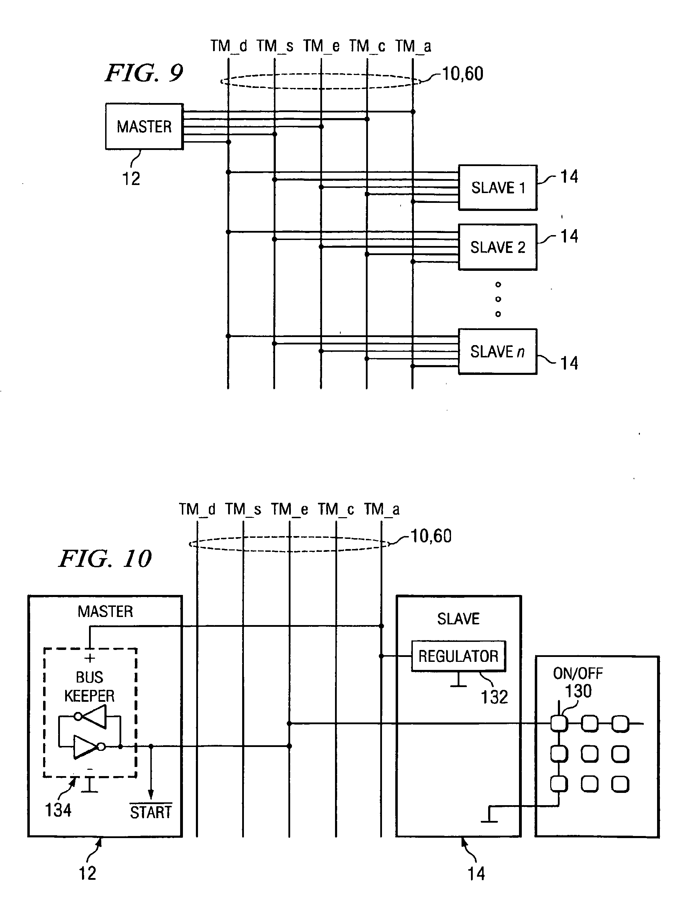

Figure 9 illustrates an alternative embodiment of bus 10, an extended TM bus 60 with two additional lines: TM_c and TM_a.

TM_a is a general purpose link, which can pass analog or digital signals. This wire can be used for many purposes. For example, the TM_a wire could be used to share an analog signal between modules of the integrated circuits of the system. TM_a could also be used for test and calibration purposes. Another interesting service given by TM_a is the possible wake up of the system from a deep very low power standby. Some examples of the use of the TM_a line are provided below.

TM_c carries a system clock. The clock on TM_c can be used, for example, by a slave 14 that has no local clock.

It should be noted that TM_a could be used without TM_c and TM_c could be used without TM_a.

The example illustrated in Figure 10 shows an application where a system is wakened from a deep power down using the TM_a wire. The master 12 has opened an interrupt window (TM_e is therefore set to high) and put itself in deep power down. The master 12 is totally powered off at the exception of the bus keeper of the TM_e wire, which could be supplied by a voltage regulator 132 from a slave 14 through the TM_a wire. The system could be wakened by a on/off button 130 connected to the TM_e wire of the bus 60. By pushing the on/off button 130, the TM_e wire is forced to ground interpreted as a signal of power up by the system. Using this configuration, a wake-up from deep power down can therefore be implemented without extra hardware or wire.

One of the advantages of the TM bus is the low number of pins needed on each integrated circuit to support the bus. Accordingly, it is beneficial to use the bus 60 to test the integrated circuits. In this regard, the ping command described above can be used. In the manufacturing cycle for a complete system using such a bus, the master can send a ping after the power-on reset. If the test equipment is connected to the bus 60, it will answer by sending its ID. The master gives the control of the bus to the test equipment by a master status setting command, using the received ID from the test equipment. The test equipment can proceed for example to BIST (built-in self test), non volatile memory download, access the scan path of any slave 14, cooperative calibration, calibration for performance, optimization, and so on. If no test equipment is connected, the master 12 takes control back after a time-out.

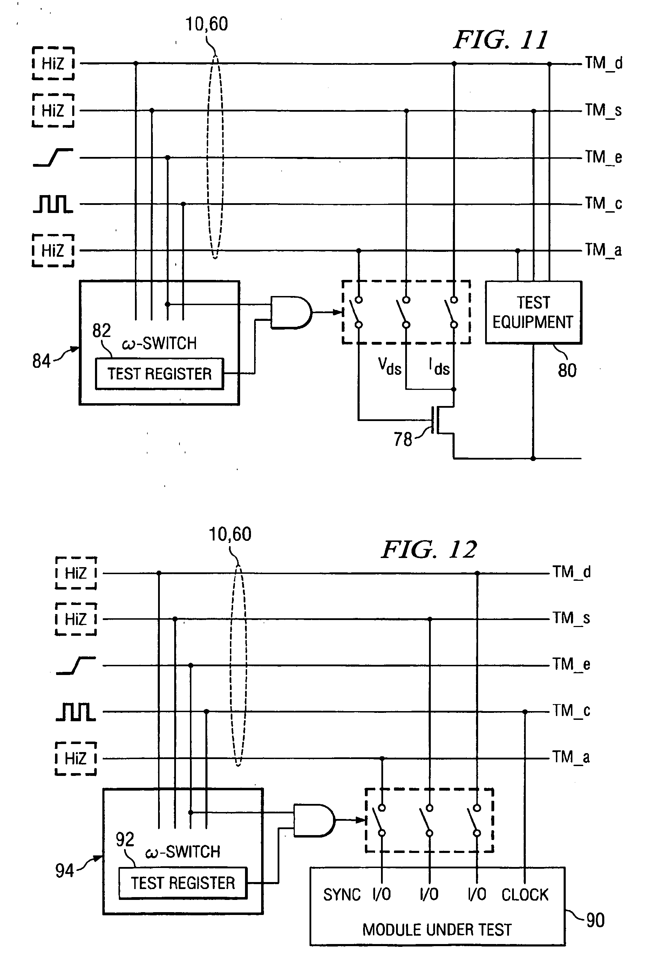

In testing, the TM_a wire can be an important asset for making digital and/or analog measurements. Figure 11 illustrates a test scenario where TM_a is used to supply and analog signal for testing purposes and Figure 12 illustrates a test scenario where TM_a is used to supply a digital signal.

Figure 11 illustrates use of the bus 60 to test a device-under-test (DUT) 78, shown in Figure 11 as an n-channel transistor. In this embodiment, a test equipment 80 takes control of the bus in the place of master 12. At test bit in register 82 of ω-switch 84 is set prior to testing. Slave devices 14 are set to HiZ on TM_d, TM_s and TM_a. When test equipment 80 generates a low-to-high transition on TM_e, a logical AND operation on the test bit and the signal on TM_e enables the switches, coupling the DUT 78 to bus 60. In the illustrated embodiment, TM_a is used by the test equipment 80 to generate a gate voltage to DUT 78 and TM_d and TM_e allow the test equipment 80 to monitor the source-drain voltage and current of the DUT 78.

Figure 12 illustrates use of the bus 60 to test a circuit 90. In this instance. TM_a is used to communicate a digital synchronization signal to or from the module under test 90, TM_d and TM_s are used for I/O and TM_c is used for a clock signal to the module 90. Once again, slave devices 14 are set to HiZ on TM_d, TM_s and TM_a. A low-to-high transition on TM_e in conjunction with a test register 92 on ω-switch 94 enables the switches coupling the module 90 to bus 10.

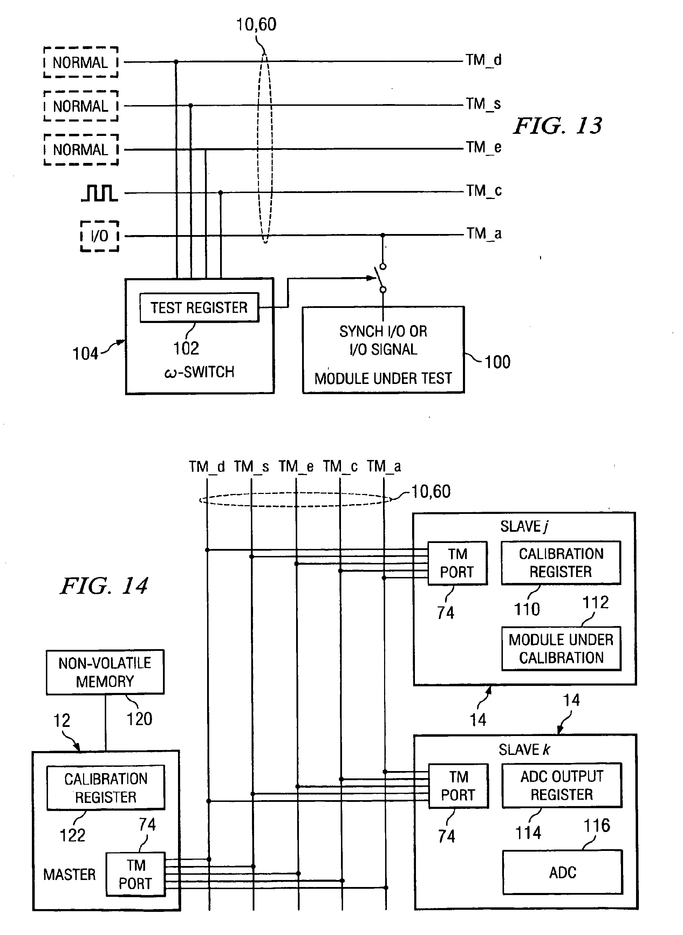

Figure 13 illustrates a test configuration wherein TM_d, TM_s and TM_e are used in their normal operation and TM_a is used for I/O to a module under test 100. A test bit in register 102 of ω-switch 104 couples TM_a to the module 100.

Figure 14 illustrates a cooperative calibration wherein TM_a is used to send an analog signal from a module under calibration 112 to an Analog-to-Digital Converter (ADC) 116. First, the calibration manager 122, using a write command, writes to the module under calibration 112 in order to connect the signal to be calibrated on the TM_a wire. Then, using another write command, the calibration manager 122 triggers a conversion of this signal by the ADC 116. The calibration manager 122, using a read command, reads the ADC output register 114. Depending on the result and on an appropriate calibration algorithm, the calibration manager 122, using a write command, updates the value stored in the calibration register 110. The signal to be calibrated generated by the module under calibration 112 varies accordingly. The process is repeated until the result is satisfactory. Finally, the calibration manager 122 stores the value of the calibration register 110 in the non-volatile memory 120. This value will be used at initialization by the calibration manager 122 to set-up the module 112.

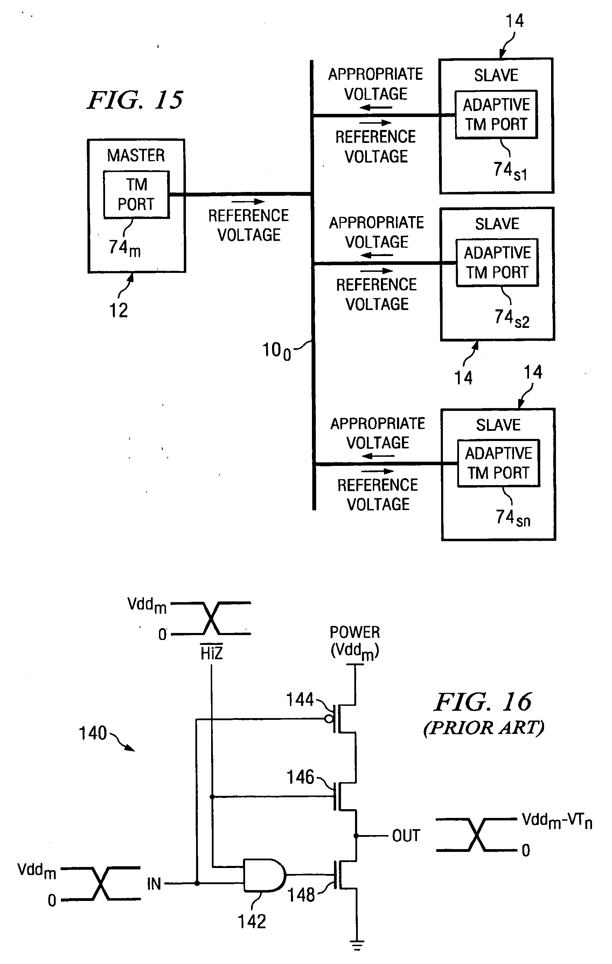

Figure 15 illustrates a block diagram illustrating multiple integrated circuits coupled to a bus 10₀ (level zero). Typically, the master circuit 12 is an integrated circuit fabricated using the latest technology. On the other hand, the slaves 14 may be fabricated using older technology. Accordingly, the slave circuit 14 may use voltage levels that are significantly higher than the voltage levels used by the master 12. In some cases, the voltage levels used by a slave circuit 14 to communicate on bus 10₀ could be damaging to the master circuit 12. Accordingly, the ports 74ₛ (individually referenced as 74ₛ₁ thorough 74ₛₙ) use an adaptive voltage technology to automatically adjust to suitable voltage levels for communication with the master circuit 12. Drivers for lower level buses are not affected, since they are internal to an integrated circuit and will thus share a fabrication technology.

The adaptive ports 74ₛ allow a slave 14 to be designed to coexist with future technology. Each adaptive port 74ₛ outputs data and control signals to bus 10 based on a Reference signal received from the master circuit 12 over bus 10. Accordingly, a particular slave circuit 14 with and adaptive port 74ₛ does not need to be redesigned to support signals for a state-of-the-art master circuit 12. Further, the master circuit 12 can be used with slave circuits 14 using a variety of different processing technologies.

Figure 16 illustrates a block diagram of a master bus driver 140 that could be used in port 74ₘ. A port 74ₘ would have strong and weak drivers; hence, a pair of drivers 140, one strong and one weak, would be used for each wire TM_d, TM_s and TM_e. In the preferred embodiment, the drivers 140 of the master for the TM_e wire also supply the Reference voltage to the slave circuits 14. Driver 140 includes a logical AND gate 142 coupled to the input (IN) signal and an active low tristate (HiZ) signal. The IN signal is also coupled to the gate of p-channel transistor 144. The tristate signal is coupled to the gate of n-channel transistor 146. The output of AND gate 142 is coupled to the gate of n-channel transistor 148. The source/drains of p-channel transistor 144, n-channel transistor 146 and n-channel transistor 148 are coupled in series between the power supply of the master (Vddₘ) and ground. The output (OUT) signal of driver 140 is the node between n-channel transistors 146 and 148.

In operation, when the tristate signal is low, the output of AND gate 142 is also low. Thus, n-channel transistors 146 and 148 are turned off, regardless of the value of IN. The OUT signal is therefore in a high impedance state. When the tristate signal is high, the n-channel transistor 146 is on, then a high signal at IN will turn off p-channel transistor 144 and turn on n-channel transistor 148, causing OUT to output a logical low signal (zero volts). A logical low IN signal will turn on p-channel transistor 144 and turn off n-channel transistor 148, causing OUT to output a logical high signal (Vddₘ-VTₙ, where VTₙ is the threshold voltage of n-channel transistor 146). Accordingly, driver 140 acts as an inverter. N-channel transistor 146 acts to reduce the output voltage swing of the driver 140 by VTₙ. While this feature is optional, it reduces power requirements for the drivers. Driver 140 is a known implementation of a low swing bus driving circuit.

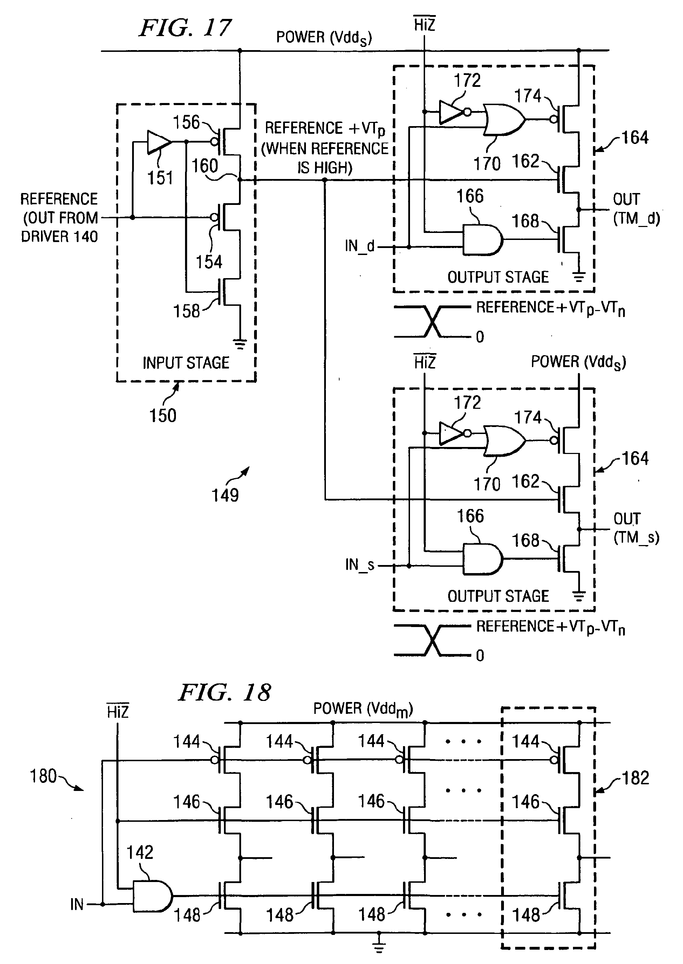

Figure 17 illustrates an adaptive driver 149 for use in the slave's adaptive ports 74ₛ (once again, separate drivers would be needed for the strong and weak drivers). The Reference signal is received from the TM_e wire of bus 10 by input stage 150 of a slave 14. This Reference signal is held (weakly) at a logical high (Vddₘ-Vtₙ) when a slave is asked to reply (see state S30 of Figure 2b) and remains high until the end of the transmission from the slave (state S40 of Figure 2b). The Reference signal is coupled to the input of Schmitt trigger 151 and to the gate of p-channel transistor 154. The output of Schmitt trigger 151 is coupled to the gates of p-channel transistor 156 and n-channel transistor 158. P-channel transistor 156, p-channel 154 and n-channel transistor 158 have their source/drains coupled in series between Vddₛ (the slave power supply) and ground.

A slave reference node 160 (with a voltage equal to the Reference+VTₚ, where VTₚ is the threshold voltage of p-channel transistor 154) is coupled to the gate of n-channel transistor 162 of each output stage 164 (there is a separate output stage for each wire TM_d and TM_s). The active-low tristate signal and the input (IN) signal are coupled to AND gate 166. The output of AND gate 166 is coupled to the gate of n-channel transistor 168. The IN signal is also coupled to OR gate 170, along with the inverted tristate signal (inverted by inverter 172). The output of OR gate 170 is coupled to the gate of p-channel transistor 174. P-channel transistor 174, n-channel transistor 162 and n-channel transistor 168 have source/drains coupled in series between Vddₛ and ground.

In operation, the Schmitt trigger 151 applies the slave's voltage swing to the voltage swing of the Reference signal; when the Reference is low (zero volts) the output of the Schmitt trigger 151 is low (zero volts) when the Reference is high (Vddₘ - VTₙ), the output of the Schmitt trigger 151 is at Vddₛ. Thus, when TM_e is at a low level (after a transmission by a slave 14 or during transmission by the master 12), p-channel transistors 154 and 156 are turned on and n-channel transistor 158 is turned off, causing a voltage of Vddₛ on node 160. When TM_e switches to a high level (after a transmission by a master 12 or during transmission by the slave 14), p-channel transistor 156 turns off and n-channel transistor 158 turns on. The voltage on node 160 falls until the output at node 160 is at the Reference+VTₚ, at which point the p-channel transistor 154 turns off.

Thus, during a period at which a slave may be driving the TM_d and TM_s wires, the n-channel transistors 162 are being driven by Reference+VTₚ. If the tristate signal is low, then n-channel transistor 168 is turned off as is p-channel transistor 174, creating a HiZ state for the OUT signal from each output stage 164. If the tristate signal is high, then OR gate 170 passes the IN signal to the gate of p-channel transistor 174 and AND gate passes the IN signal to n-channel transistor 168. If the IN signal is high, then n-channel transistor 168 will be turned on and p-channel transistor 174 will be turned off. Hence, OUT will be coupled to ground through n-channel transistor 168. On the other hand, if the IN signal is low, then n-channel transistor 168 will be turned off and p-channel transistor 174 will be turned on. The OUT signal will reach the voltage of the slave reference node 160, less the threshold voltage VTₙ of n-channel transistor 162, or Reference+VTₚ-VTₙ. As threshold voltages VTₚ and VTₙ are roughly equal, the OUT signal is then roughly equal to the slave reference node 160. Accordingly, the voltage swing on the bus 10 during a slave transmission will automatically be compatible with the voltage swing of the master 12.

This aspect of the present invention provides a significant advantage, since the bus 10 may be used with a mix of older technologies with newer technologies, thereby protecting the investment in the slave circuits 14.

Figure 18 illustrates a driver 180 which is a variation on the bus drivers described above, where multiple "fingers" 182 of the output transistors may be programmably added to the output of the driver 180 in order to adapt the drive capability to the actual capacitance of an external TM bus to provide the high drive needed to match an external tester. A status register (not shown) could be used, for example, to configure the number of fingers used. While Figure 18 is shown with a master bus driver 140, the same programmability could be provided to the output stages 164 of slave bus drivers 149.

## Claims

1. A circuit including a master circuit (12) and a plurality of slave circuits (14);
a bus (10) for communicating between said master circuit (12) and said slave circuits (14) comprising:
first and second wires (TM_d, TM_s) for communicating using data strobe encoding; and
a third wire (TM_e) for allocating access of said first and second wires between the master circuit (12) and the slave circuits (14) **characterised in that**
the master circuit (12) and said slave circuits (14) include driver circuitry (140, 149, 180) to selectively generate either strong or weak logic level signals on the third wire (TM_e) for controlling access to the first and second wires (TM_d, TM_s), wherein the strong logic signal is used only at the end of the transmission by either the master circuit (12) or slave circuits (14) to transition from a high to a low state or a low to high state.

2. The circuit of claim 1, wherein said driver circuitry (140, 149, 180) of the master circuit and said slave circuits further generates either strong or weak logic level signals on said first and second wires (TM_d, TM_s).

3. The circuit of claim 2, wherein said driver circuitry (180) includes multiple levels (182) of output transistors that can be selectively enabled to adjust the drive capability of the driver circuitry (180).

4. The circuit of claim 3, wherein said driver circuitry (140, 149, 180) of said master circuit (12) and said slave circuits (14) include circuitry to apply a high impedance state to said bus wires (10).

5. The circuit of claim 1, wherein said master circuit (12) includes circuitry for generating a first portion of a data stream at a first frequency and a second portion of the data stream at a second frequency.

6. The circuit of claim 1, wherein said bus (10) further includes a fourth wire (TM_a) for passing either analog or digital signals.

7. The circuit of claim 6, wherein said fourth wire (TM_a) is used for calibrating and testing slave circuits.

8. The circuit of claim 6, wherein said fourth wire is used to receive a user-initiated signal to awaken the master circuit (12) from a power-down state.

9. A method of communicating data words between a master circuit (12) and a plurality of slave circuits (14) over first and second bus wires (TM_d, TM_s) using data strobe encoding, comprising the steps of:
access to said first and second wires (TM_d, TM_s) between the master circuit (12) and the slave circuits (14) using control signals on a third wire (TM_e) and **characterized in that**
the master circuit (12) and the slave circuits (14) selectively generate either strong or weak logic level signals on the third wire (TM_e) for controlling access to the first and second wires (TM_d, TM_s), wherein the strong logic signal is used only at the end of the transmission by either the master circuit (12) or slave circuits (14) to transition from a high to a low state or a low to high state.

10. The method of claim 9, further comprising the steps of:
maintaining a previous state on said first and second wires (TM_d, TM_s) using a weak signal; and transmitting a new data word using strong signals.

## Patentansprüche

1. Schaltung, mit einer Master-Schaltung (12) und mehreren Slave-Schaltungen (14); und
einem Bus (10) zum Kommunizieren zwischen der Master-Schaltung (12) und den Slave-Schaltungen (14), der umfasst:
einen ersten und einen zweiten Draht (TM_d, TM_s) zum Kommunizieren unter Verwendung einer Datenabrufsignal-Codierung; und
einen dritten Draht (TM_e) zum Zuweisen des Zugriffs auf den ersten und den zweiten Draht zwischen der Master-Schaltung (12) und den Slave-Schaltungen (14), **dadurch gekennzeichnet, dass**
die Master-Schaltung (12) und die Slave-Schaltungen (14) eine Treiberschaltungsanordnung (140, 149, 180) enthalten, um wahlweise entweder starke oder schwache Logikpegelsignale auf dem dritten Draht (TM_e) zu erzeugen, um den Zugriff auf den ersten und den zweiten Draht (TM_d, TM_s) zu steuern, wobei das starke Logiksignal nur am Ende der Übertragung entweder durch die Master-Schaltung (12) oder durch die Slave-Schaltungen (14) verwendet wird, um einen Übergang von einem hohen zu einem niedrigen Zustand oder von einem niedrigen zu einem hohen Zustand auszuführen.

2. Schaltung nach Anspruch 1, wobei die Treiberschaltungsanordnung (140, 149, 180) der Master-Schaltung und der Slave-Schaltungen ferner entweder starke oder schwache Logikpegelsignale auf dem ersten und dem zweiten Draht (TM_d, TM_s) erzeugt.

3. Schaltung nach Anspruch 2, wobei die Treiberschaltungsanordnung (180) mehrere Ebenen (182) von Ausgangstransistoren enthält, die wahlweise durchgeschaltet werden können, um die Treiberfähigkeit der Treiberschaltungsanordnung (180) einzustellen.

4. Schaltung nach Anspruch 3, wobei die Treiberschaltungsanordnung (140, 149, 180) der Master-Schaltung (12) und der Slave-Schaltungen (14) eine Schaltungsanordnung enthält, um einen Zustand mit hoher Impedanz in die Busdrähte (10) einzugeben.

5. Schaltung nach Anspruch 1, wobei die Master-Schaltung (12) eine Schaltungsanordnung zum Erzeugen eines ersten Teils eines Datenstroms mit einer ersten Frequenz und eines zweiten Teils des Datenstroms mit einer zweiten Frequenz enthält.

6. Schaltung nach Anspruch 1, wobei der Bus (10) ferner einen vierten Draht (TM_a), auf dem sich entweder analoge oder digitale Signale bewegen, enthält.

7. Schaltung nach Anspruch 6, wobei der vierte Draht (TM_a) zum Kalibrieren und Testen von Slave-Schaltungen verwendet wird.

8. Schaltung nach Anspruch 6, wobei der vierte Draht verwendet wird, um ein durch den Anwender initiiertes Signal zu empfangen, um die Master-Schaltung (12) aus einem Zustand mit heruntergefahrener Leistung aufzuwecken.

9. Verfahren zum Übermitteln von Datenwörtern zwischen einer Master-Schaltung (12) und mehreren Slave-Schaltungen (14) über einen ersten und einen zweiten Busdraht (TM_d, TM_s) unter Verwendung einer Datenabrufsignal-Codierung, das die folgenden Schritte umfasst:
Zugreifen auf den ersten und den zweiten Draht (TM_d, TM_s) zwischen der Master-Schaltung (12) und den Slave-Schaltungen (14) unter Verwendung von Steuersignalen auf einem dritten Draht (TM_e), **dadurch gekennzeichnet, dass**
die Master-Schaltung (12) und die Slave-Schaltungen (14) wahlweise entweder starke oder schwache Logikpegelsignale auf dem dritten Draht (TM_e) erzeugen, um den Zugriff auf den ersten und den zweiten Draht (TM_d, TM_s) zu steuern, wobei das starke Logiksignal nur am Ende der Übertragung entweder durch die Master-Schaltung (12) oder durch die Slave-Schaltungen (14) verwendet wird, um einen Übergang von einem hohen zu einem niedrigen Zustand oder von einem niedrigen zu einem hohen Zustand auszuführen.

10. Verfahren nach Anspruch 9, das ferner die folgenden Schritte umfasst:
Aufrechterhalten eines früheren Zustands auf dem ersten und dem zweiten Draht (TM_d, TM_s) unter Verwendung eines schwachen Signals; und Senden eines neuen Datenwortes unter Verwendung starker Signale.

## Revendications

1. Circuit comprenant un circuit maître (12) et une pluralité de circuits esclave (14) ;
un bus (10) pour communiquer entre ledit circuit maître (12) et lesdits circuits esclaves (14), comprenant :
des premiers et deuxièmes fils conducteurs (TM_d, TM_s), pour communiquer, en utilisant un codage d'échantillonnage de données ; et
un troisième fil conducteur (TM_e), pour allouer un accès auxdits premiers et deuxièmes fils conducteurs entre le circuit maître (12) et les circuits esclaves (14), **caractérisé en ce que**
le circuit maître (12) et lesdits circuits esclaves (14) comprennent un circuit d'attaque (140, 149, 180), pour générer sélectivement des signaux à niveau logique soit fort soit faible sur le troisième fil conducteur (TM_e), de manière à commander l'accès aux premiers et deuxièmes fils conducteurs (TM_d, TM_s), dans lequel le signal à niveau logique fort est utilisé uniquement à la fin de la transmission, soit par le circuit maître (12), soit par les circuits esclaves (14), pour effectuer une transition d'un état haut à un état bas, ou d'un état bas à un état haut.

2. Circuit selon la revendication 1, dans lequel le circuit d'attaque (140, 149, 180) du circuit maître et desdits circuits esclaves génère en outre des signaux à niveau logique soit fort, soit faible, sur lesdits premiers et deuxièmes fils conducteurs (TM_d, TM_s).

3. Circuit selon la revendication 2, dans lequel le circuit d'attaque (180) comprend une pluralité de niveaux (182) de transistors de sortie, qui peuvent être sélectivement activés pour ajuster la capacité d'attaque du circuit d'attaque (180).

4. Circuit selon la revendication 3, dans lequel le circuit d'attaque (140, 149, 180) dudit circuit maître (12) et desdits circuits esclaves comprend un circuit, pour appliquer un état de haute impédance auxdits fils conducteurs de bus (10).

5. Circuit selon la revendication 1, dans lequel ledit circuit maître (12) comprend un circuit pour générer une première partie d'un flux de données à une première fréquence et une deuxième partie du flux de données à une deuxième fréquence.

6. Circuit selon la revendication 1, dans lequel ledit bus (10) comprend en outre un quatrième fil conducteur (TM_a) pour faire passer des signaux, soit analogiques, soit numériques.

7. Circuit selon la revendication 6, dans lequel ledit quatrième fil conducteur (TM_a) est utilisé pour calibrer et tester les circuits esclaves.

8. Circuit selon la revendication 6, dans lequel ledit quatrième fil conducteur est utilisé pour recevoir un signal initié par l'utilisateur pour réveiller le circuit maître (12) depuis un état de coupure d'alimentation.

9. Procédé de communication de mots de données entre un circuit maître (12) et une pluralité de circuits esclave (14), sur des premiers et deuxièmes fils conducteurs de bus (TM_d, TM_s), en utilisant un codage d'échantillonnage de données, comprenant les étapes consistant à :
accéder auxdits premiers et deuxièmes fils conducteurs (TM_d, TM_s) entre le circuit maître (12) et les circuits esclaves (14), en utilisant des signaux de commande sur un troisième fil conducteur (TM_e) et **caractérisé en ce que**
le circuit maître (12) et les circuits esclaves (14) génèrent sélectivement des signaux de niveau logique, soit fort, soit faible, sur le troisième fil conducteur (TM_e), pour commander l'accès aux premiers et deuxièmes fils conducteurs (TM_d, TM_s), dans lequel le signal logique fort est utilisé uniquement à la fin de la transmission, soit par le circuit maître (12), soit par les circuits esclave (14), pour effectuer une transition d'un état haut à un état bas, ou d'un état bas à un état haut.

10. Procédé selon la revendication 9, comprenant en outre les étapes consistant à :
maintenir un état antérieur sur lesdits premiers et deuxièmes fils conducteurs (TM_d, TM_s) en utilisant un signal de niveau logique faible ; et transmettre un nouveau mot de données en utilisant des signaux de niveau logique fort.
